# EUROPEAN PATENT SPECIFICATION

(11) **EP 2 665 875 B1**
(45) Date of publication and mention of the grant of the patent: **05.08.2020**
(21) Application number: 11849046.5
(22) Date of filing: 13.12.2011
(51) Int. Cl.: E03C 1/28, E03C 1/294, E03F 5/04, E03C 1/126, G05D 9/02

(54) **LIQUID REFILLING DEVICE FOR WATER TRAPS (DRAIN TRAPS) IN FLOOR DRAINS AND THE LIKE**
FLÜSSIGKEITNACHFÜLLVORRICHTUNG FÜR WASSERABSCHEIDER (ABFLUSSABSCHEIDER) IN BODENABLÄUFEN UND DERGLEICHEN
DISPOSITIF DE REMPLISSAGE EN LIQUIDE POUR SIPHONS À EAU (SIPHONS) DANS DES DRAINS DE SOL, ET ANALOGUE

(30) Priority: 14.12.2010 SE 1001189
(43) Date of publication of application: 27.11.2013
(73) Proprietor: Lundmark, Staffan, 93192 Skellefteå (SE)
(72) Inventor: Lundmark, Staffan, 93192 Skellefteå (SE)
(86) International application number: PCT/SE2011/000228
(87) International publication number: WO 2012/082043

(56) References cited:
- WO-A2-2008/105628
- DE-A1- 4 424 691
- DE-U1- 9 004 405
- FR-A1- 2 004 021
- GB-A- 607 986
- JP-A- 2002 000 096
- JP-A- 2003 082 733
- US-A- 3 422 835

## Description

### Field of the Invention

The present invention concerns a device for the refilling (filling) of liquid (fluid) in drain traps (water traps, water seals) in floor drains and similar in accordance with the claims. The present invention also regards a method for using the device in accordance with the present invention.

### Background of the Invention

The vast majority of today's floor drains utilize so-called water traps (drain traps, water seals) to prevent sewer gases and the like from entering bathrooms, kitchens, basements, garages, buildings and similar places where these floor drains are installed. One problem with floor drains and the like is that their drain traps, if seldom used, run the risk of "drying out" that is, liquid (water) and the like disappears or evaporates from the floor drain. When water in the floor drain drops below a certain level, the drain trap ceases to function and this in turn entails that sewage gases and the like are able to seep up through the floor drain from the sewer.

Another problem with floor drains is the growth of bacteria in the water of the floor drain. If the floor drain is not used regularly, that is to say that the floor drain's water trap is not regularly supplied with water, the gradual growth of bacteria and where possible even mold growth will occur in the water of the floor drain's water trap. Bacterial growth in the water of the drain trap in the floor drain leads after a time to foul odors spreading in the area around the floor drain.

The above mentioned problems mean that people who spend time near a floor drain may experience discomfort due to foul sewer gases and foul-smelling water in the drain trap. Furthermore, bacterial and mold growth in the water of the floor drain's water trap causes negative impact on individuals' and animals' health in the vicinity of the floor drain.

One way to tackle the problem is to visit each floor drain regularly and refill water in them if necessary. As an example, an office building of 10,000 m2 with about 400 people most often has 60 to 80 floor drains. Some of these floor drains are hard to access or evaporate faster than others. To ensure that none of these floor drains dry out or start to smell, requires extensive efforts by the person doing the filling at considerable costs for the property owner.

### Prior Art

Devices that prevent odors from floor drains and the like are already known. For example, JP2003082733 describes a device that hampers the smell from a floor drain or similar. The function is based on hot water being added to the floor drain's water trap at certain intervals with the intent to kill bacteria in the floor drain. The design differs in a significant way from the design according to the present invention.

In the patent application FR2004021A1 a refilling device for automatically fill liquid to at least one predetermined level in a water trap of a floor drain. The application gives no guidance on how to dimensioning the hose to the floor drain. The design differs in a significant way from the design according to the present invention.

In the patent US3422835 describes a valve for charging sewer line water traps. The application gives no guidance on how to dimensioning hose to the floor drain. The design differs in a significant way from the design according to the present invention.

In the patent application GB607986A describes a device for automatic maintenance of a constant level of liquid in a container. The application gives no guidance on how to dimensioning hose to the floor drain. The design differs in a significant way from the design according to the present invention.

In the patent application JP2002000096A describes an automatic water feeding tool, The application gives no guidance on how to dimensioning hose to the floor drain. The design differs in a significant way from the design according to the present invention.

In the patent application DE4424691A describes an automatic level regulation device for engine oil. The application gives no guidance on how to dimensioning hose to the floor drain. The design differs in a significant way from the design according to the present invention.

### Brief Description of the Invention Concept

The main purpose of the present invention is to create a significantly improved device which eliminates or greatly reduces the problems mentioned above. Another purpose of the present invention is to create a device by which the addition of fluid (water) to the floor drain's water trap may be easily ensured. An additional purpose of the present invention is to create a refilling device by which additives to the water may be supplied in a simple manner. A yet further purpose of the present invention is to create a method for using a device in accordance with the present invention.

### Brief Description of the Drawings

In the following detailed description of the present invention, reference and references to the following figures will occur. Each figure is briefly described in the following figure list. Note that the figures are schematic and details may thus be omitted in these. The exemplifying embodiments in the figures are neither limiting nor expanding for the scope of protection of the present patent application, which is defined by the appended claims.

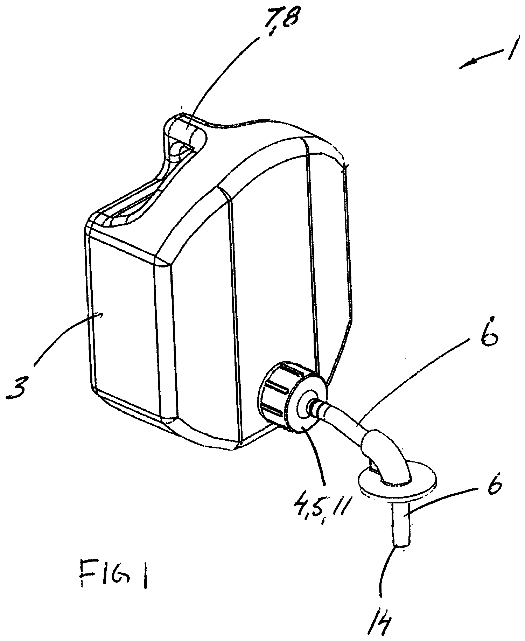

Fig. 1 shows a design in accordance with the present invention seen in perspective from above.
Fig. 2A to 2C show details included in the present invention.
Fig. 3 shows an example of use of a refilling device where it is placed on a surface at or adjacent to a floor drain or similar.
Fig. 4 shows an example of use of a refilling device where it is connected to a bracket on a wall adjacent to a floor drain or similar.

### Detailed Description of the Invention

With reference to the figures, a refilling device 1 intended to be used to replenish fluid (liquid), and ensure the fluid level in a drain trap in a floor drain 2 or similar is shown. The refilling device 1 includes at least one reservoir (tank, container) 3 with at least one enclosed interior space. The interior space of the reservoir 3 is intended to contain the liquid that the refilling device adds to the floor drain's water trap. The interior space of the reservoir 3 is in contact with an area exterior the reservoir via at least one opening that is placed in the reservoir's bottom section. The opening consists of a combined outlet/inlet 4 for liquid and air into and out of the interior space of the reservoir. The outlet/inlet 4 is via at least one connector 5 connected to at least one hose 6, tube or the like. The hose 6 is intended to be inserted down into the floor drain's 2 water trap and transfer the liquid from the reservoir's 3 interior space to the floor drain's water trap (drain trap).

The reservoir 3 is preferably made of a substantially dimensionally stable material, such as hard plastic, metal or other suitable substantially dimensionally stable material or materials, so that the reservoir 3 does essentially not change shape and be crumpled because of a little negative pressure inside the reservoir 3. In the shown embodiment, the reservoir 3 is preferably made of a polymeric material such as a suitable hard plastic.

The reservoir's 3 shape shown in the figures exemplifies the preferred embodiments of the reservoir. The reservoir may have any of several shapes or forms that are suitable for the purpose such as round, cylindrical, box-like, bottle-like or other suitable design.

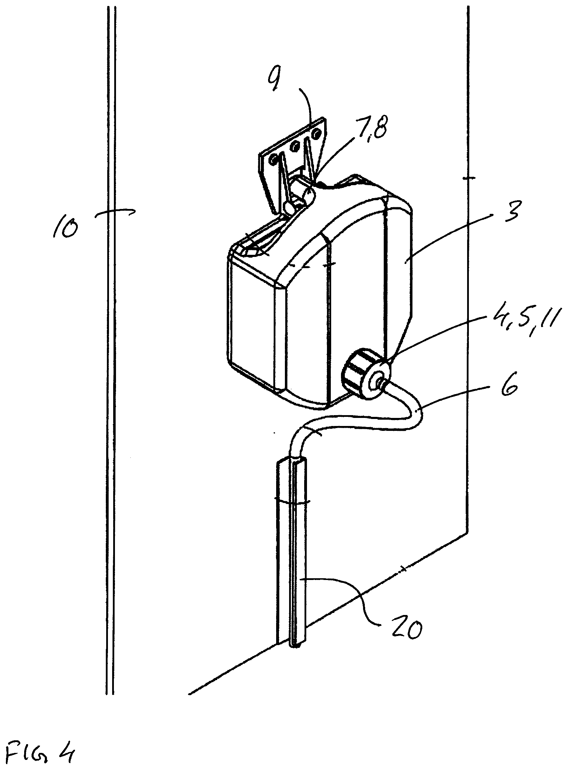

In the shown embodiment, the reservoir 3 further includes at least one handle **7** and at least one mounting element **8.** The handle 7 is intended to be used during handling and moving of the reservoir 3. The mounting element 8 is intended to be used for hanging the reservoir 3 in a. bracket **9** (shown in Fig. 4) on a wall **10** or the like. In the preferred embodiment shown in figures, the handle 7 and the mounting element 8 are integrated into one unit. In other embodiments the handle may be optional feature, or may be omitted from the design.

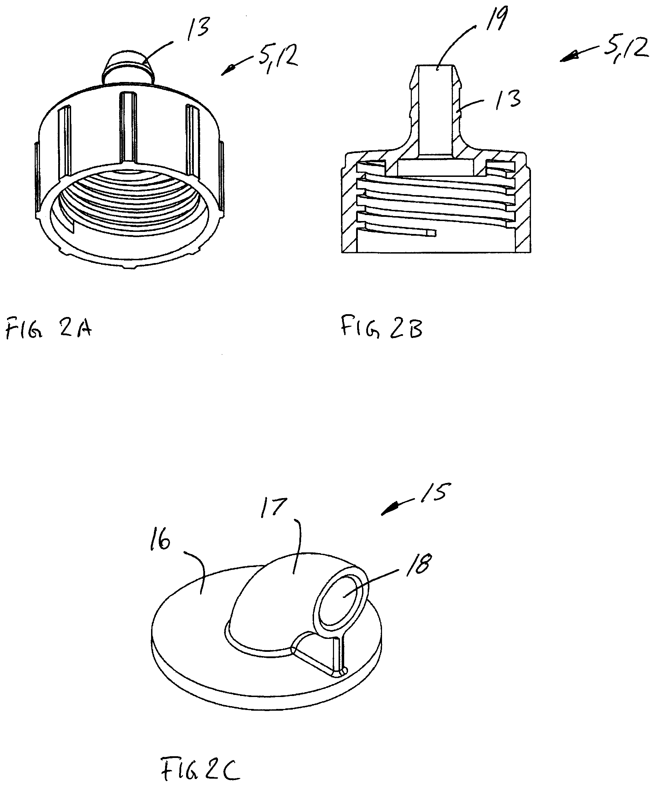

With reference to Fig. 2, the outlet/inlet 4 of the reservoir 3 is shown in more detail. The outlet/inlet 4 of the reservoir 3, in the exemplifying embodiment consists of a threaded pipe connection **11.** The pipe connection 11 is preferably integrated with the reservoir 3. A connector 5 in the form of a spout, screw cap **12** or the like is connected to the threaded pipe connection 11. The connector 5 includes at least one connecting part **13** to which at least one hose 6, tube or the like is connected to in its one end. The hose's 6, tube's or the like's other end **14,** hereinafter referred to as the free end 14, is intended to be inserted down into the water trap of for example a floor drain. In other embodiments two or more of the following parts, the reservoir, the inlet/outlet, the connection, the connecting part, the screw cap, the hose or the tube, may be partially or completely integrated with each other.

Unique to the present refilling device 1 is that it includes at least one adjusting device **15** with which the hose's 6 maximum insertion into the floor drain may be adjusted. The adjusting device 15 in the exemplifying embodiment includes a washer **16** provided with at least one tube lead-through **17** with a through hole **18** through which the hose 6 is inserted through the washer 16. The washer 16 is movable along the hose's 6 lengthwise direction. Preferably, the washer 16 is temporarily locked to the hose 6 via clamping forces between the hose 6 and the tube lead-through 17 in the washer 16. Alternatively, another for the purpose suitable device (locking device), may be used to temporarily lock the hose 6 to the washer 16. By changing the washer's 16 position along the hose 6, in the hose's lengthwise direction, the hose's 6 free end 14 may be inserted down into the floor drain's water trap and in this manner be adjusted. The washer's 16 position is preferably adjusted along the hose's 6 lengthwise direction the first time that the refilling device 1 is used in a floor drain. The washer's 16 position along the hose 6 may also need to be adjusted if the refilling device 1 is moved between floor drains. In other embodiments the adjustment device may be of a previous known adjusting device or other suitable device for the purpose.

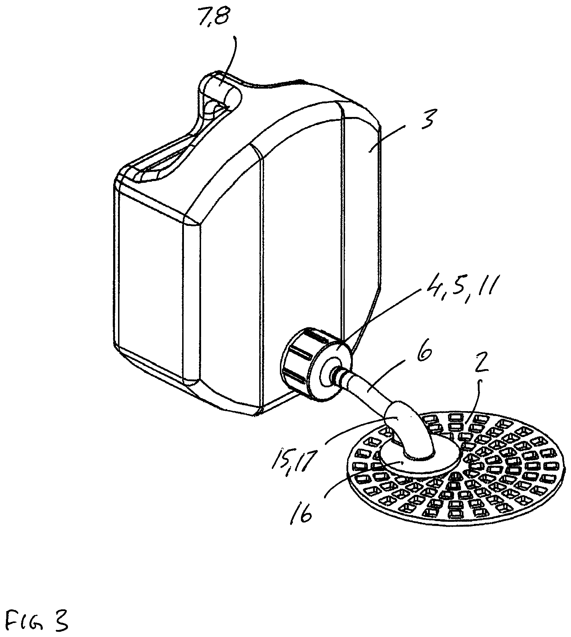

The refilling device 1, when used is placed with the fluid filled reservoir 3 adjacent to, or near, a floor drain. The refilling device 1 may for example be placed on a surface adjacent to the floor drain as shown in Fig. 3. The refilling device 1 may also be connected to a wall as shown in Fig. 4. The embodiments shown in the figures are not limiting for how the refilling device, according to the present invention, may be placed adjacent to a floor drain or similar. After the refilling device 1 has been positioned adjacent to the floor drain 2, the hose 6 is inserted into the water trap of the floor drain and adjusted if necessary to a level suitable for the purpose. The adjustment of the hose's 6 insertion into the floor drain 2 in the shown embodiment is accomplished by adjusting the washer's 16 position along the hose's 6 lengthwise direction. The hose's 6 free end 14 is then inserted down through the grating in the cover of the floor drain 2, or through another opening, into the water trap of the floor drain. If the fluid level (the surface of the liquid) in the water trap is below the level of the hose's free end 14, air will enter through the hose 6 into the interior space of the reservoir 3 which then releases liquid (such as water) through the mouth of the hose's free end 14 into the water trap. When the liquid level in the water trap reaches the level of the mouth of the hose 6 or over it, the flow from the reservoir 3 through the hose to the floor drain's 2 water trap is stopped. An automatic function is achieved by way of this design, whereby the liquid is automatically added to the water trap as soon as the liquid level in the water trap drops below the level of the end of the hose. Thanks to this design the liquid that evaporates or otherwise disappears from the floor drain's 2 water trap is automatically replaced with new liquid.

The function for an automatic level control of the liquid level in the floor drain's water trap is made possible by the force of gravity which causes water to flow down from the reservoir and air rising up to the reservoir's 3 interior space through the hose 6 and then through the connecting part 13 and the outlet/inlet 4. This function requires that no other air passages or other openings (holes) exist through which air can freely flow into the reservoir's 3 interior space. The design may however include at least one second opening or the like which may be opened and closed.

The automatic level control function is also dependent on the diameter of the hole 19 of the connecting part 13 (in the connector 5) and the diameter of the hole in the hose 6. The diameter of the hole 19 in the connecting part 13 and the diameter of the hole in the hose 6 is adapted so that fluid flows out of the reservoir 3 when the liquid level in the water trap of the floor drain 2 lies below the level of the hose's 6 free end 14 and that the liquid ceases to flow down into the water trap of the floor drain 2 from the reservoir 3 when the liquid level in the water trap in floor drain 2 has reached the level of the hose's free end 14 or slightly above the level of the hose's free end 14. In order to achieve the automatic level control function, the reservoir 3 must be of a stiff (rigid, inflexible) material so that the reservoir is not compressed (crumpled) by a little negative pressure in the reservoir 3.

If a reservoir 3 has an interior volume up to about three liters, the hole 19 in the connecting part 13 lies preferably between 7.0 to 20 millimeters. The diameter of the hole 19 in the connecting part 13 lies preferably in the range of 7.8 to 8.0 millimeters. A connecting part 13 with a hole 19 having a smaller diameter may not allow the liquid to flow out from the reservoir 3 (this may be due to air bubbles not being able to pass the connecting part 13). A connecting part 13 with a larger diameter hole 19 may cause the liquid to be likely to flow out of the reservoir 3 without stopping. The attached hose 6 is preferably selected so that it has an inside diameter of at least the same diameter as the hole 19 in the connecting part 13.

The smallest diameter size of the hose may be calculated using the following formula with the premise of a vertical liquid-filled hose (tube) that is enclosed at one end, in the present invention, the end attached to the reservoir, and that an air bubble is allowed to rise up through the hose from the hose's free end into the reservoir. For the air bubble to rise up, a corresponding amount of liquid must pass down through the hose. When the liquid meets the air bubble, the liquid is pressed toward the inner walls of the hose and form a type of film along the inside of the hose (tube) with the air bubble in the middle.
*ρgr*²/γ<0.842

The formula above specifies the conditions under which a water film's thickness is zero due to surface tension, etcetera, and thus no water can pass and the air bubble is trapped in the hose. When the air bubble does not move no water will flow through the hose.
g = gravity = 9.81m/s²
p = density difference between air and water = 1000 kg/m3
r = radius of inner tube
y = surface tension = 72mN / m according to the attached curve

By using the assumptions above and by where among others the liquid used in the calculation is water, the hose's inside diameter must therefore theoretically be larger than 5 mm. This does not mean that the air bubble automatically rises at 5.1 mm and not at 5 mm but this air bubble rising is also for example dependent on the way the hose is stretched from the reservoir to the water trap. When testing the diameter in relation to different types of stretches, an optimum hose (tube) diameter was found to be in the range between 7.8 mm to 8 mm. Even a hose (tube) with as large a diameter of 9 mm allows air bubbles to rise up through the tube in the manner desired. By using another kind of liquid or liquid mixture other than pure water the density and surface tension variables may have different values which in turn will allow a different minimum diameter of the hose.

The hose 6 stretches from the reservoir 3 so that it has a slope downward along its stretch from the reservoir 3 to floor drain 2. If the hose 6 along any part of its stretch from the reservoir 3 to the floor drain 2 is directed upward, a malfunction may occur (a type of involuntary water seal may occur in the hose).

With reference to Fig. 4 is shown how the hose 6 may be connected to a wall or similar via a list (border) 20 or the like. The list 20 allows the hose 6 to be directed in the downward direction thereby eliminating the risk of malfunction in the automatic regulation of the liquid level in the water trap (a malfunction may occur if the hose forms an arch or similar with a hose section directed upwards). Furthermore, the list 20 allows the stretch of the hose 6 to be more aesthetically pleasing, that is to say more appealing. Assembly of the list 20 may be accomplished in manner suitable for the purpose, such as by double-sided adhesive tape or the like.

When the fluid in the interior space of the reservoir 3 during use begins to run out, liquid (water) must be refilled into the interior space of the reservoir. Refilling is accomplished by lifting up the refilling device's hose 6 from the floor drain's 2 water trap and by removing the reservoir 3 from any brackets. Water or other liquid is then filled into the reservoir 3 through the outlet/inlet 4. The previously performed positioning of the hose's 6 insertion length into the water trap of the floor drain 2 by the previously performed adjustment of the washer's 16 position along the hose's 6 lengthwise direction means that this positioning is already accomplished. The refilling devicel is then replaced adjacent to the floor drain, after which the hose 6 is reinserted back into the water trap.

The refilling device in accordance with the present patent application may for example be used to keep sewer odors from entering basements, fan rooms, storage rooms and janitor's closets in large buildings such as hotels, industrial buildings, office buildings, department stores and other types of large buildings. Furthermore, the refilling device may for instance be used to insure that fluids are present in floor drains that are visited infrequently or irregularly. For example, the refilling device may with advantage be used in floor drains in vacation homes and similar buildings.

In alternative embodiments it is conceivable that additives are added to the water in the reservoir 3. For example, it is conceivable that additives of chlorine (chlorine tablets), or other germicides, are added to the water with the intent to kill bacteria in the water of the drain trap. With the addition of chlorine to the water in the floor drain 2, a. floor drain may stay fresh for months instead of about two weeks (the time period that an unused drain trap usually stays fresh) before sewage odor or bad smells arise in connection with the floor drain. These additives to the fluid may for example be suitable for use in hospitals and clinics and the like that require higher standards of hygiene.

In the detailed description of the present invention, design details may have been omitted which are apparent to persons skilled in the art in the intended field of the invention. Such obvious design details are included to the extent necessary so that the proper and full performance of the present invention is achieved.

Even if certain preferred embodiments have been described in detail, variations and modifications within the scope of the invention may become apparent for specialists in the field of the invention. All such variations and modifications are regarded as falling within the scope of the following claims. For example, it is conceivable that the refilling device 1 includes a cut-off device such as a valve or the like with which the flow through the hose 6 can be regulated. It is for example conceivable that the present device be defined as a device by which the water level in a floor drain is ensured.

### Advantages of the Invention

With the present invention it is possible to attain several advantages. The most important advantage is that a simple device to ensure that there is water in the drain trap of a floor drain is achieved. The present invention's simplicity brings with it the advantage that it is cost effective to manufacture and utilize. A further advantage of the present invention is that a proper water level in a floor drain's water trap is ensured. In this way, a correct water level is maintained and the floor drain is only refilled when needed, which in turn saves water. Furthermore, the correct water level in the floor drain prevents unwanted smelly sewer gases from penetrating up through the sewer and into the building the floor drain is found in. A still further advantage of the present invention is that more hygienic conditions are achieved in areas with floor drains that are rarely used.

## Claims

1. Refilling device (1) suitable to be used to automatically fill liquid to at least one predetermined level in a water trap of a floor drain (2) or the like, including at least one reservoir (3) provided with one combined outlet/inlet (4) which via at least one connector (5), with a through hole (19), is connected to one end of at least one hose (6), tube or the like of the refilling device (1) through which the liquid is intended to flow from the reservoir (3) to the floor drain's (2) water trap through the hose's (6) free end (14), which when used is inserted in the water trap and the refilling device (1) includes at least one adjusting device (15) with which the hose's (6) insertion into the floor drain (2) may be adjusted and an automatic refilling function is accomplished by the fluid being transferred from the interior space of the reservoir (3) via the hose (6) by gravity into the water trap of the floor drain (2) when the liquid level in the water trap of the floor drain (2) drops below the free end (14) as air enters through the hose (6) into the interior space of the reservoir (3) and the fluid stops flowing out of the reservoir (3) to the water trap of the floor drain (2) when the liquid level of the floor drain (2) reaches the level of the hose's (6) free end (14) or just above it **characterised by** that the refilling device (1) is suitable to be used in healthcare facilities, and that the reservoir (3) is made of hard plastic and that the through hole (19) is formed in a connecting part (13) of the connector (5) and has an inner diameter of between 7.0 to 20.0 millimetres and that the reservoir (3) includes a handle (7) and a mounting element (8) integrated into one unit, the handle (7) for use during handling and moving of the reservoir (3) and the mounting element (8) for hanging the reservoir (3) in a bracket.

2. Refilling device (1) according to claim 1 **characterized by** that the through hole (19) in the connecting part (13) of the connector (5) has inner diameter of between 7.8 to 8.0 millimeters.

3. Method for utilization of a refilling device (1) according to claim 1 to ensure a proper water level in a water trap in a floor drain (2), **characterized by** that the refilling device's (1) reservoir (3), which is wholly or partially filled with liquid, is positioned adjacent to the floor drain in which the liquid level is to be ensured, after which the hose's (6) maximum insertion into the water trap of the floor drain (2) is set with the adjusting device (15), after which an automatic control of the liquid level in the water trap of the floor drain (2) is accomplished until the liquid level in the reservoir (3) runs out, when the liquid runs out fluid is refilled in the reservoir.

## Patentansprüche

1. Nachfüllvorrichtung (1) zum automatischen Nachfüllen von Flüssigkeit bis zu mindestens einem festgelegten Füllstand in einem Wasserabscheider eines Bodenablaufs (2) und dergleichen mit mindestens einem Behälter (3) mit einem kombinierten Einlauf/Auslauf (4), der über mindestens einen Anschluss (5) mit einem Durchgangsloch (19) an das Ende mindestens eines Schlauches (6) und dergleichen der Nachfüllvorrichtung (1) angeschlossen ist, durch den die Flüssigkeit aus dem Behälter (3) in den Wasserabscheider des Bodenablaufs (2) durch das freie Ende (14) des Schlauches (6) fließt, der bei Gebrauch in den Wasserabscheider eingeführt ist, wobei die Nachfüllvorrichtung (1) über mindestens eine Einstellvorrichtung (15) verfügt, über die das Einführen des Schlauches (6) in den Bodenablauf (2) verstellt werden kann, und eine automatische Nachfüllung dadurch erzielt wird, dass die Flüssigkeit aus dem Innenraum des Behälters (3) durch Schwerkraft über den Schlauch (6) in den Wasserabscheider des Bodenablaufs (2) strömt, sobald der Flüssigkeitsstand im Wasserabscheider des Bodenablaufs (2) unter das freie Ende (14) sinkt, da Luft durch den Schlauch (6) in den Innenraum des Behälters (3) eindringt, und das Ausströmen der Flüssigkeit aus dem Behälter (3) in den Wasserabscheider des Bodenablaufs (2) abbricht, sobald der Flüssigkeitsstand im Bodenablauf (2) die Höhe des freien Endes (14) des Schlauchs (6) erreicht oder knapp darüber liegt, **gekennzeichnet dadurch, dass** die Nachfüllvorrichtung (1) für den Einsatz in Gesundheitseinrichtungen geeignet ist und dass der Behälter (3) aus Hartplastik besteht und dass das Durchgangsloch (19) im Anschlussstück (13) des Anschlusses (5) ausgeformt ist und einen Innendurchmesser von 7,0 bis 20,0 Millimeter hat und dass der Behälter (3) über einen Handgriff (7) und eine Aufhängung (8) verfügt, die in die Vorrichtung integriert sind, wobei der Handgriff (7) zur Handhabung und zum Bewegen des Behälters (3) und die Aufhängung (8) zum Aufhängen des Behälters (3) an einer Halterung dient.

2. Nachfüllvorrichtung (1) nach Anspruch 1, **dadurch gekennzeichnet, dass** das Durchgangsloch (19) im Anschlussstück (13) des Anschlusses (5) einen Innendurchmesser von 7,8 bis 8,0 Millimeter hat.

3. Methode zur Verwendung einer Nachfüllvorrichtung (1) nach Anspruch 1 zum Sicherstellen eines ordnungsgemäßen Wasserstandes in einem Wasserabscheider eines Bodenablaufs (2), **dadurch gekennzeichnet, dass** der Behälter (3) der Nachfüllvorrichtung (1), der ganz oder teilweise mit Flüssigkeit gefüllt ist, in der Nähe des Bodenablaufs positioniert wird, in dem der Flüssigkeitsstand sichergestellt werden soll, wonach die maximale Einführtiefe des Schlauches (6) in den Wasserabscheider des Bodenablaufs (2) mit der Einstellvorrichtung (15) eingestellt wurde, wonach eine automatische Regulierung des Flüssigkeitsstandes im Wasserabscheider des Bodenablaufs (2) erfolgt.

## Revendications

1. Dispositif de recharge (1) conçu pour être utilisé pour remplir automatiquement du liquide jusqu'à au moins un niveau prédéterminé dans un piège à eau de siphon de sol (2) ou similaire, comprenant au moins un réservoir (3) équipé d'une sortie/entrée combinée (4) qui via au moins un raccord (5), avec un trou débouchant (19), est relié à une extrémité d'au moins un tuyau (6) ou élément similaire du dispositif de recharge (1) par lequel le liquide doit circuler du réservoir (3) vers le piège à eau du siphon de sol (2) par l'extrémité libre (14) du tuyau (6), qui lorsqu'elle est utilisée est insérée dans le piège à eau et le dispositif de recharge (1) comprend au moins un dispositif de réglage (15) avec lequel l'insertion (6) du tuyau dans le siphon de sol (2) peut être réglée et une fonction automatique de recharge est réalisée par le transfert du fluide de l'espace intérieur du réservoir (3) à travers le tuyau (6) et par gravité dans le piège à eau du siphon de sol (2) lorsque le niveau de liquide dans le piège à eau du siphon de sol (2) est inférieur à l'extrémité libre (14) lorsque de l'air pénètre par le tuyau (6) dans l'espace intérieur du réservoir (3) et le fluide cesse de s'écouler hors du réservoir (3) vers le piège à eau du siphon de sol (2) lorsque le niveau de liquide du siphon de sol (2) atteint le niveau de l'extrémité libre (14) du tuyau (6) ou juste au-dessus **caractérisé en ce que** le dispositif de recharge (1) est conçu pour être utilisé dans des établissements de santé et que le réservoir (3) est en plastique dur et que le trou débouchant (19) est formé dans la pièce de branchement (13) du raccord (5) et a un diamètre intérieur compris entre 7,0 et 20,0 millimètres et que le réservoir (3) comprend une poignée (7) et un élément de montage (8) intégrés dans l'unité, la poignée (7) servant à la manipulation et au déplacement du réservoir (3) et l'élément de montage (8) à la suspension du réservoir (3) à une fixation.

2. Le dispositif de recharge (1) selon la revendication 1 **caractérisé en ce que** le trou débouchant (19) dans la pièce de branchement (13) du raccord (5) a un diamètre intérieur compris entre 7,8 et 8,0 millimètres.

3. Méthode d'utilisation d'un dispositif de recharge (1) selon la revendication 1 pour assurer un niveau adéquat d'eau dans un piège à eau de siphon de sol (2) **caractérisé en ce que** le réservoir (3) du dispositif de recharge (1), qui est rempli totalement ou partiellement de liquide, est positionné de façon adjacente au siphon de sol dans lequel le niveau de liquide doit être assuré, après quoi l'insertion maximale du tuyau (6) dans le piège à eau du siphon de sol (2) est définie avec le dispositif de réglage (15), après quoi un contrôle automatique du niveau de liquide dans le piège à eau du siphon de sol (2) est réalisé.
